# EUROPEAN PATENT APPLICATION

(11) **EP 1 880 906 A1**
(43) Date of publication of application: **23.01.2008**
(21) Application number: 06821995.5
(22) Date of filing: 20.10.2006
(51) Int. Cl.: B60R 21/20

(54) **INTERIOR FINISHING PANEL ASSEMBLY AND AIR BAG DEVICE**

(30) Priority: 26.10.2005 JP 2005311430
(71) Applicant: TAKATA CORPORATION, Minato-ku, Tokyo 106-8510 (JP)
(72) Inventor: KANNO, Yuki, Tokyo 106-8510 (JP)
(74) Representative: Heunemann, Dieter
(86) International application number: PCT/JP2006/320934
(87) International publication number: WO 2007/049514

(57) **Abstract**

There are provided an interior panel assembly in which a base end of a door section is reinforced, and an airbag device including the interior panel assembly. When an inflator 63 is actuated, inflation of an airbag 62 starts. The airbag 62 presses a door section 44 from the back side, tear lines 41 to 43 are thereby torn, and the door section 44 is opened while turning into the cabin. Ribs 45 are provided at base ends of the door section 44 so as to reinforce the base ends. Openings 58 may be provided in connecting portions between hinges 53 and flaps 51, and ribs 45A may extend long so that one end of each rib 45A enters the corresponding opening 58. Extending portions 59 may be provided to project from the flaps 51 to the hinges 53, and the extending pieces 59 may be fixed to the base ends of the door frame 44, for example, by vibration welding.

## Description

### Technical Field

The present invention relates to an interior panel assembly and an airbag device mounted, for example, at a passenger seat of an automobile, and more particularly, to an airbag device in which a door section of an interior panel is opened while turning toward the cabin during inflation of an airbag.

### Background Art

A passenger airbag device mounted in an automobile includes a folded airbag, a retainer to which the airbag is attached, an inflator (gas generator) for inflating the airbag, and a lid or instrument panel door provided in front of the retainer.

When the inflator generates gas, inflation of the airbag starts, the lid or instrument panel door is cloven and pushed open along a tear line, and the airbag is deployed into the cabin so as to protect the passenger.

An airbag door support structure in which an instrument panel door is lined is described in Japanese Unexamined Patent Application Publication No. 2004-161182.

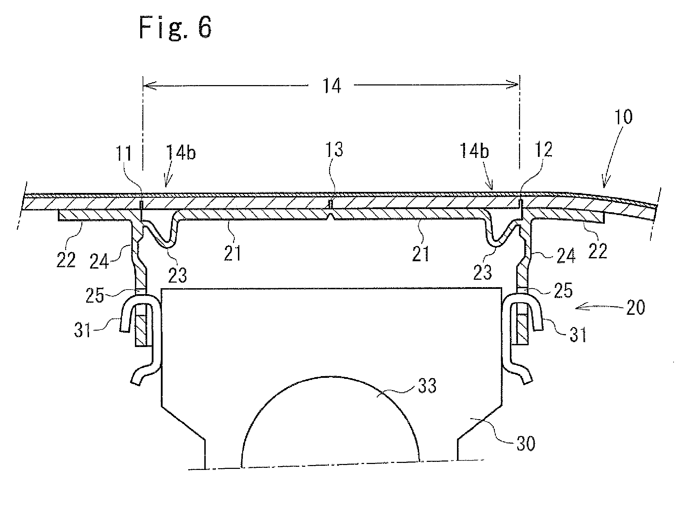

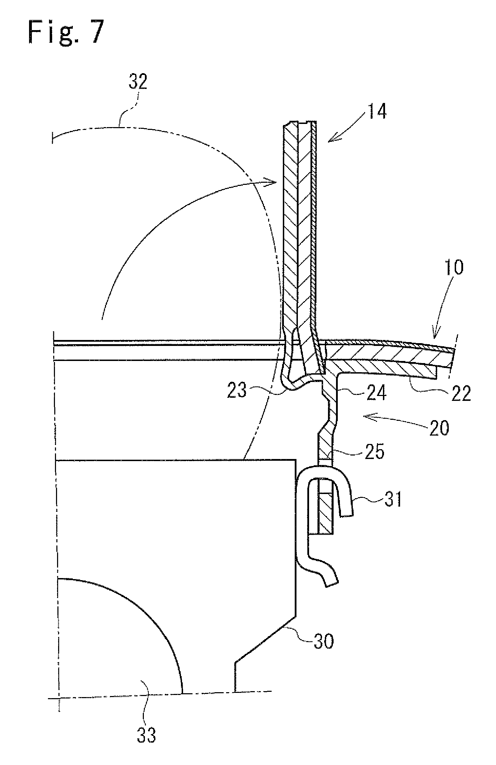

Figs. 6 and 7 illustrate the structure shown in Figs. 9 and 11 of the above-described publication. Tear lines 11, 12, and 13 are provided on a back surface of an interior panel (an instrument panel in this case) 10, and a door section 14 is set. A door frame 20 is fixed to the back surface near the door section 14. The door frame 20 includes a flap 21 fixed to the door section 14, a frame 22 surrounding the flap 21, hinges 23 that connect the flap 21 and the frame 22, and a leg portion 24 standing from the frame 22. The frame 22 is fixed to the back surface of the interior panel 10 around the door section 14. The hinges 23 are curved in a substantially U-shape. The hinges 23 are separate from the door section 14 without being fixed thereto.

Hooks 31 of a retainer 30 are caught in hook holes 25 provided in the leg portion 24. An airbag 32 (Fig. 7) is stored in a folded fashion in the retainer 30 so that it can be inflated by an inflator 33.

When the inflator is actuated, inflation of the airbag 32 starts. The airbag 32 presses the door section 14 from the back side, the tear lines 11 to 13 are thereby torn, and the door section 14 starts to open while turning toward the cabin, as shown in Fig. 7.

The hinges 23 allow the door section 14 to be opened and raised.
Patent Document 1: Japanese Unexamined Patent Application Publication No. 2004-161182

In the above-described known art, base ends 14b of the door section 14 are not lined with the flap 21.

### Disclosure of Invention

An object of the present invention is to provide an interior panel assembly in which base ends of a door section are reinforced, and an airbag device including the interior panel assembly.

An interior panel assembly according to a first aspect of the present invention includes an interior panel having a door section that is opened and turned into a cabin by being pressed by an airbag from the back side; and a door frame fixed to a back surface of the interior panel at and around the door section. The door frame includes a flap fixed to the door section; a frame surrounding the flap and fixed to the back surface of the interior panel around the door section; a hinge configured to connect the flap and the frame, the hinge opposing a base end of the door section when the door section is opened, and being separate from the base end; and a leg portion standing from the frame. The interior panel assembly further includes reinforcing means configured to reinforce the base end of the door section.

The reinforcing means may be provided on a back surface of the door section.

The reinforcing means includes a rib.

The rib may extend in a direction such as to connect the frame and the flap.

An opening may be provided in a portion of the flap opposing the hinge, and the rib may extend into the opening.

The reinforcing means includes an extending piece that is connected to the flap, extends from the flap to a back surface of the base end of the door section, and is fixed to the back surface.

A tear line may be provided along the frame on the back surface of the interior panel at the base end of the door section.

An airbag device according to a second aspect includes the interior panel assembly according to the first aspect; a retainer opposing the back surface of the door section of the interior panel; an airbag stored in the retainer; an inflator configured to inflate the airbag; and a connecting member configured to connect the retainer and the leg portion of the door frame.

### Brief Description of the Drawings

[Fig. 1] Fig. 1 is a longitudinal sectional view of an airbag device according to an embodiment.
[Fig. 2] Fig. 2a is a cross-sectional view of a hinge and an enlarged view of a section IIA in Fig. 1. Figs. 2b and 2c are cross-sectional views, respectively, taken along lines IIB-IIB and IIC-IIC in Fig. 2a.
[Fig. 3] Fig. 3 is a perspective view of a door frame.
[Fig. 4] Fig. 4a is a cross-sectional view showing the surroundings of a hinge according to another embodiment, and Fig. 4b is a perspective view of a door frame.
[Fig. 5] Fig. 5a is a cross-sectional view showing the surroundings of a hinge according to a further embodiment, and Fig. 5b is a perspective view of a door frame.
[Fig. 6] Fig. 6 is a cross-sectional view showing a known art.
[Fig. 7] Fig. 7 is a cross-sectional view showing the known art.

### Detailed Description

According to the present invention, a base end of a door section of an interior panel assembly is reinforced with reinforcing means. Therefore, the base end is prevented from damage and shattering.

When a tear line is provided along a frame on a back surface of the base end of the door section, stress concentrates at the tear line during inflation of the airbag, and cleavage at the tear line is promoted.

It is preferable, for easy manufacturing, that the reinforcing means be provided on a back surface of the door section.

As the reinforcing means, a rib is suitably used because of its simple structure. A reinforcing effect is enhanced by extending the rib in a direction that connects the frame and a flap. In this case, when an opening is provided in a portion of the flap opposing the hinge and the rib extends into the opening, an area on which the rib has a reinforcing effect can be expanded.

The reinforcing member include an extending piece that is connected to the flap, extends from the flap to a back surface of the base end of the door section, and is fixed to the back surface. In this case, the interior panel assembly may be similar to a known assembly.

Embodiments will be described below with reference to the drawings.

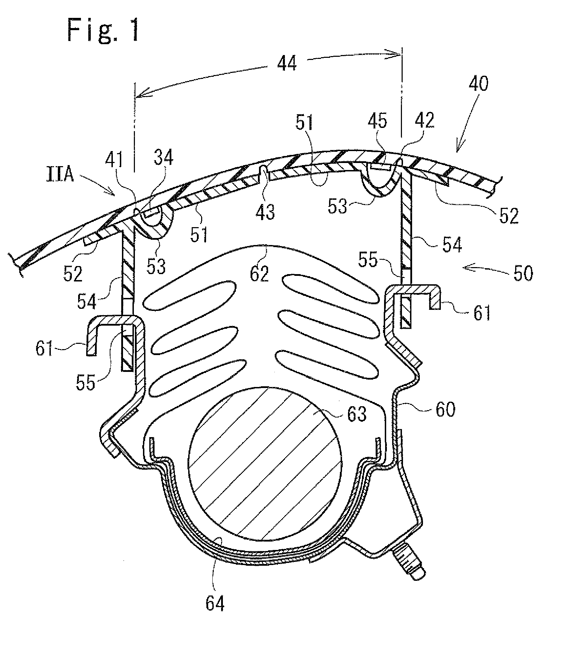

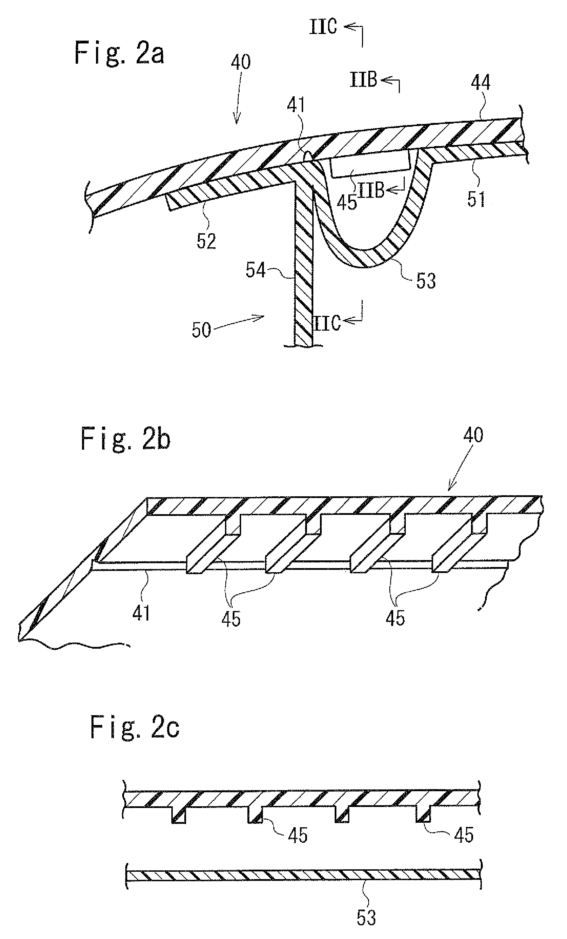

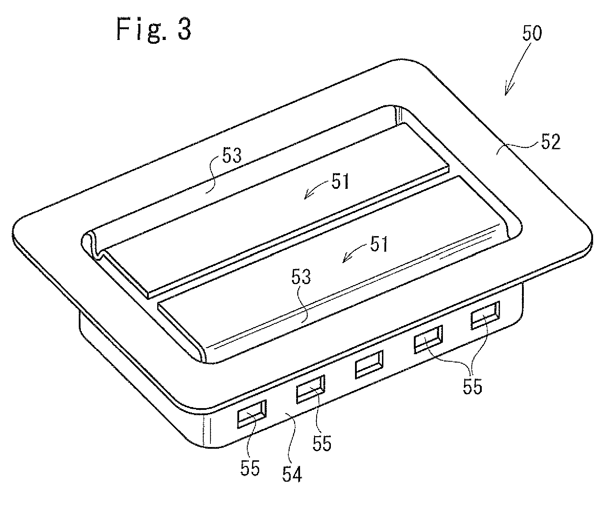

Fig. 1 is a longitudinal sectional view of an airbag device according to an embodiment, Fig. 2a is a cross-sectional view of a hinge and an enlarged view of a section IIA in Fig. 1, Figs. 2b is a cross-sectional perspective view, taken along line IIB-IIB in Fig. 2a, and Fig. 2c is a cross-sectional view, taken along line IIC-IIC in Fig. 2a. Fig. 3 is a perspective view of a door frame.

Tear lines 41, 42, and 43 are provided on a back surface of an interior panel (in this case, an instrument panel, or a lid) 40, and a portion between the tear lines 41 and 42 serves as a door section 44. Ribs 45 are provided at base ends of the door section 44.

A door frame 50 is fixed to the back surface near the door section 44. The door frame 50 includes flaps 51 fixed to the door section 44, a frame 52 surrounding the flaps 51, hinges 53 that connect the flaps 51 and the frame 52, and a leg portion 54 standing from the frame 52.

The frame 52 is fixed to the back surface of the interior panel 40 around the door section 44. The hinges 53 are curved in a substantially U-shape. The hinges 53 are separate from the door section 44 without being fixed thereto.

Hooks 61 of a retainer 60 are caught in hook holes 55 of the leg portion 54. An airbag 62 is stored in a folded fashion in the retainer 60 so that it can be inflated by an inflator 63. Reference numeral 64 denotes a fitting with which the airbag 62 is attached to the retainer 60. The structure for connecting the airbag 62 and the retainer 60 is not limited thereto.

In this embodiment, the retainer 60 is a substantially rectangular container that is open at the top, and the leg portion 54 of the door frame 50 is also shaped like a substantially rectangular frame. The frame 52 laterally extends outward like a flange from the entire upper periphery of the leg portion 54.

In this embodiment, two flaps 51 are provided, and base ends of the flaps 51 are connected to a pair of inner long sides of the frame 52 via the hinges 53. A slight clearance is provided between the leading ends of the flaps 51, and the above-described tear line 43 extends along the clearance.

The tear lines 41 and 42 extends along the base ends of the back surface of the door section 44. In this embodiment, the tear lines 41 and 42 oppose the adjacency of the inner peripheral edge of the frame 52.

The base ends of the door section 44 face the hinges 53, but are separate from the hinges 53, as described above. In this embodiment, the ribs 45 extend at the base ends of the door section 44 and in a direction that connects the frame 52 and the flaps 51. A plurality of ribs 45 are spaced in a direction in which the inner peripheral edge of the frame 52 extends. The ribs 45 have a length such as to be placed in the hinges 53.

In this embodiment, the interior panel 40 is formed of a thermoplastic synthetic resin, and the ribs 45 are provided integrally with the interior panel 40. The flaps 51, the frame 52, and the hinges 53 are formed integrally with the leg portion 54 by synthetic resin. Preferably, the flaps 51 and the frame 52 are fixed to the interior panel 40 by vibration welding.

In the airbag device having the above-described configuration, when the inflator 63 is actuated, inflation of the airbag 62 starts. The airbag 62 presses the door section 44 from the back side, the tear lines 41 to 43 are thereby torn, and the door section 44 is opened while turning into the cabin.

Similarly to the case shown in Fig. 7, the hinges 53 allow the door section 44 to be raised upward, and allow the base ends of the door section 44 to be put into an aperture formed in the interior panel after the door section 44 is opened.

Since the base ends of the door section 44 are reinforced by the ribs 45 in this embodiment, they will not be torn even when the door section 44 is opened. Moreover, since the flexural rigidity of the base ends of the door section 44 is increased by the ribs 45, flexural stress concentrates at the tear lines 41 and 42 when the door section 44 is opened, and tear of the tear lines 41 and 42 is promoted.

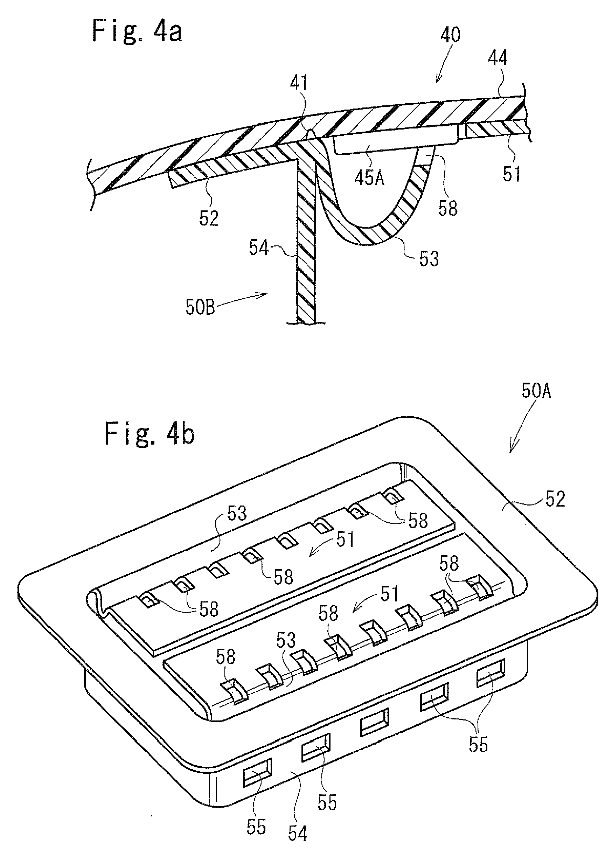

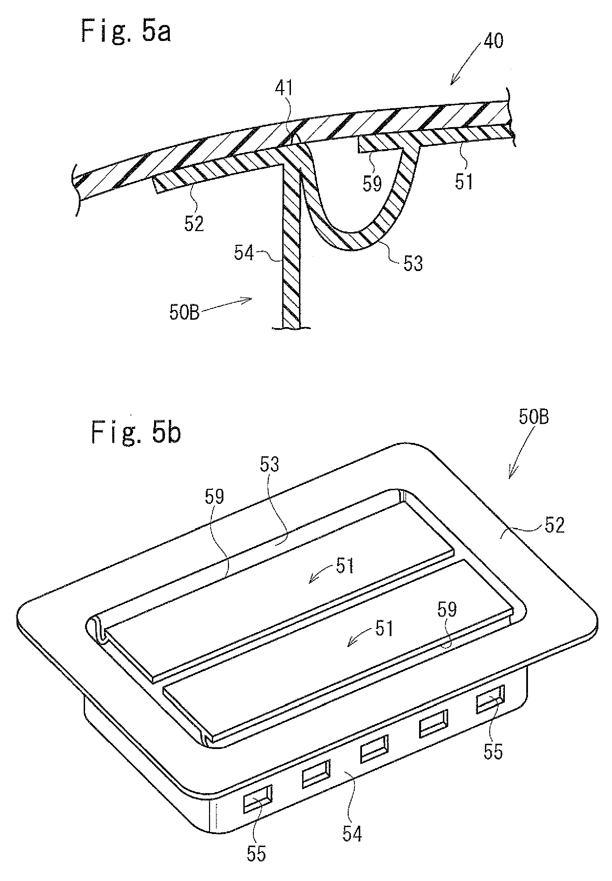

Figs. 4a and 4b and Figs. 5a and 5b are explanatory views showing other embodiments.

While the ribs 45 have a length such as to be placed in the hinges 53 in the embodiment shown in Figs. 1 to 3, opening 58 may be provided in connecting portions between hinges 53 and flaps 51, and ribs 45A may extend long so that one end of each rib 45A enters the corresponding opening 58, as in a door frame 50A shown in Figs. 4a and 4b. This enlarges the range reinforced by the ribs 45A.

Other structures in Figs. 4a and 4b are the same as those adopted in the embodiment shown in Figs. 1 to 3.

In the present invention, the base ends of the door section 44 may be reinforced by reinforcing means other than the ribs. For example, as in a door frame 50B shown in Figs. 5a and 5b, extending pieces 59 may be provided to project from flaps 51 toward hinges 53, and the extending pieces 59 may be fixed to the base ends of the door section 44 by vibration welding.

The above-described embodiments are exemplary embodiments of the present invention, and the present invention is not limited to the above embodiments.
While the present invention has been described in detail with reference to the specific embodiments, it is obvious to those skilled in the art that various modifications are possible without departing from the purpose and scope of the present invention.
This application is based on Japanese Patent Application No. 2005-311430 filed October 26, 2005, which is hereby incorporated by reference herein in its entirety.

## Claims

1. An interior panel assembly comprising:
an interior panel having a door section that is opened and turned into a cabin by being pressed by an airbag from the back side; and
a door frame fixed to a back surface of the interior panel at and around the door section,
wherein the door frame includes:
a flap fixed to the door section;
a frame surrounding the flap and fixed to the back surface of the interior panel around the door section;
a hinge configured to connect the flap and the frame, the hinge opposing a base end of the door section when the door section is opened, and being separate from the base end; and
a leg portion standing from the frame, and
wherein the interior panel assembly further includes reinforcing means configured to reinforce the base end of the door section.

2. The interior panel assembly according to claim 1, wherein the reinforcing means is provided on a back surface of the door section.

3. The interior panel assembly according to claim 2, wherein the reinforcing means includes a rib.

4. The interior panel assembly according to claim 3, wherein the rib extends in a direction such as to connect the frame and the flap.

5. The interior panel assembly according to claim 4, wherein an opening is provided in a portion of the flap opposing the hinge, and the rib extends into the opening.

6. The interior panel assembly according to claim 1, wherein the reinforcing means includes an extending piece that is connected to the flap, extends from the flap to a back surface of the base end of the door section, and is fixed to the back surface.

7. The interior panel assembly according to claim 6, wherein the extending piece extends along a side of the flap at the base end.

8. The interior panel assembly according to claim 1, wherein a tear line is provided along the frame on the back surface of the interior panel at the base end of the door section.

9. An airbag device comprising:
the interior panel assembly according to claim 1;
a retainer opposing a back surface of the door section of the interior panel;
an airbag stored in the retainer;
an inflator configured to inflate the airbag; and
a connecting member configured to connect the retainer and the leg portion of the door frame.
